Europäisches Patentamt

European Patent Office

Office européen des brevets

(11) Veröffentlichungsnummer: **0 350 591**
**A1**

## (12) EUROPÄISCHE PATENTANMELDUNG

(21) Anmeldenummer: 89108645.6

(51) Int. Cl.4: **E06B 3/26**

(22) Anmeldetag: **13.05.89**

(30) Priorität: 23.06.88 DE 8808116 U

(43) Veröffentlichungstag der Anmeldung:
**17.01.90 Patentblatt 90/03**

(84) Benannte Vertragsstaaten:
**AT BE CH DE ES FR GB GR IT LI LU NL SE**

(71) Anmelder: **METALLBAU KOLLER AG**
**Güterbahnhofplatz 8**
**CH-4132 Muttenz / Basel(CH)**

(72) Erfinder: **Cammarasano, Raffael**
**Angensteinerstr. 26**
**D-4153 Reinach(DE)**
Erfinder: **Weiss, Günther**
**Bromenackerweg 41**
**D-7858 Weil a. Rhein 5(DE)**
Erfinder: **Woelfert, Dietmar**
**Wallbrunnstr. 110**
**D-7850 Lörrach(DE)**

(74) Vertreter: **Ernicke, Hans-Dieter, Dipl.-Ing.**
**Patentanwälte Dipl.-Ing. H.-D. Ernicke**
**Dipl.-Ing. Klaus Ernicke Schwibbogenplatz**
**2b**
**D-8900 Augsburg(DE)**

(54) **Wärmegedämmtes Verbundprofil für Fenster und dgl.**

(57) Die Erfindung befaßt sich mit einem wärmegedämmten Verbundprofil für Fenster und dgl., bei dem angestrebt wird, den schubfesten Verbund zwischen den Metallprofilen und dem einzelnen, diese Metallprofile verbindenden Isolierstab gegenüber vorbekannten Anordnungen zu verbessern und dauerhaft zu halten. Zu diesem Zweck werden quer zur Profillängsachse sich erstreckende Verzahnungen besonderer Art in die den Isolierstab umgreifende Schenkel der Metallprofile eingebracht, die aus zwei in geringem Abstand voneinander befindlichen, in bestimmter Weise profilierten Einstanzungen (8) mit einem dazwischen verbleibenden Materialbereich (9) besteht, der zahnartig gegen die zugeordnete Außenseite des Isolierstabes gepreßt wird.

FIG. 3

## Wärmegedämmtes Verbundprofil für Fenster und dgl.

Die Erfindung bezieht sich auf ein wärmegedämmtes Verbundprofil, insbesondere für Fenster, Türen und Fassaden, bestehend aus zwei im Abstand voneinander gehaltenen Metallprofilen, die über mindestens einen in Nuten der Metallprofile eingesetzten Isolierstab miteinander verbunden sind, wobei im Bereich der Verbindungsstellen quer zur Profillängsachse sich erstreckende, ineinandergreifende Verzahnungen zwischen dem Isolierstab und den die Nut begrenzenden Schenkeln der Metallprofile zur Erhöhung der Scherfestigkeit der Verbindung vorgesehen sind.

Es sind verschiedene Maßnahmen zur Erhöhung der Scherfestigkeit bei solchen Verbundprofilen bekannt. Bei der DE-AS 27 51 622 werden die Innenflächen der die Nuten begrenzenden Schenkel mit Querprofilierungen versehen, bevor die Nut mit einem schaumfähigen Isolierstoff ausgefüllt wird. Bei solchen Verbundprofilen besteht das Problem, daß die Scher- bzw. Schubfestigkeit zwischen Metallprofil und Isolierstoffkörper durch alterungsbedingte Verformungen im Laufe der Zeit nachläßt.

Beim Gegenstand der DE-OS 27 17 352 werden die Innenflächen der die Nut begrenzenden Schenkel des Metallprofiles quer zur Profillängsachse mit Einkerbungen versehen, bevor diese Schenkel gegen den danach eingeführten Isolierstab verformt werden. Dadurch drücken sich die Verzahnungen beim Verformungsvorgang in die Außenfläche des Isolierstabes und bilden einen schub- bzw. scherfesten Verbund. Solche Maßnahmen haben den Nachteil, daß in den verformten, die Nut begrenzenden Schenkeln eine aus der Verformungskraft resultierende Rückstellkraft innewohnt, die im Laufe der Zeit den schubfesten Verbund lockert.

Es ist schließlich durch die DE-AS 25 59 599 bekannt, den Isolierstab sägezahnartig einzukerben und die Schenkel gegen den Isolierstab so zu verspannen, daß sich Materialbereiche der Schenkel in die Lücken der sägezahnartigen Profilierungen eingreifen. Auch in diesem Falle ist eine Lokkerung des Verbundes im Laufe der Zeit durch die Rückstellkraft der verformten, die Nut begrenzenden Schenkel festzustellen.

Der Erfindung liegt daher die Aufgabe zugrunde, ein wärmegedämmtes Verbundprofil zu entwikkeln, bei dem die geschilderten Nachteile vorbekannter Lösungen nicht eintreten können. Im besonderen wird ein schubfester Verbund zwischen den Metallprofilen und dem einzelnen Isolierstab angestrebt, der sich im Laufe der Zeit nicht lockert oder löst.

Ausgehend vom erwähnten Stand der Technik besteht die Erfindung darin, daß die einzelne Verzahnung aus zwei in geringem Abstand voneinander befindlichen Einstanzungen im Schenkel des Metallprofiles mit einem dazwischen verbleibenden Materialbereich besteht, der zahnartig gegen die zugeordnete Außenseite des Isolierstabes gepreßt ist.

Bei der Anwendung der erfindungsgemäßen Lehre ist es gleichgültig, ob der Verbund zwischen den einzelnen Metallprofilen und den Isolierstäben durch Ausschäumung oder durch Verformung von Schenkeln der Metallprofile gebildet wird. Im Gegensatz zum Stand der Technik werden bei der Erfindung also keine vorbeugenden Maßnahmen getroffen, um die angestrebte Scher- bzw. Schubfestigkeit zwischen den Metallprofilen und den Isolierstäben zu erreichen. Es ist daher gleichgültig, ob die Isolierstäbe ausgeschäumt oder als Leisten zwischen den Metallprofilen verspannt werden.

Im Sinne der Erfindung ist vorgesehen, daß der zwischen den Einstanzungen befindliche Materialbereich verdichtet bzw. gestaucht ist.

Im Grundsatz besteht das Lösungsprinzip der Erfindung darin, den vorhandenen Verbund zwischen den Schenkeln des Metallprofiles und den Isolierstäben punktförmig scherfest zu machen, wobei jedoch die punktförmige Verformung konzentriert erhalten bleiben soll und sich nicht willkürlich nach außen ausbreitet. In diesem Sinne lehrt die Erfindung, daß der zwischen den Einstanzungen befindliche Materialbereich verdichtet bzw. gestaucht wird. Die Einstanzungen bilden somit eine Grenze, welche das Ausbreiten des dazwischen befindlichen Materialbereiches verhindert. Das Material zwischen den Ausstanzungen wird vielmehr in begrenztem Ausmaß verdichtet und gegen die Außenfläche der Isolierstäbe verdrängt, wo sich eine punktförmige Verzahnung bildet, die sich im Gegensatz zum Stand der Technik nicht im Laufe der Zeiten lockert.

Mit den Merkmalen der Ansprüche 3 und 4 werden vorteilhafte Gestaltungen der Einstanzungen und Verformungen aufgezeigt.

In den Ansprüchen 5 und 6 sind zweckmäßige Gestaltungen von Werkzeugen zur Erzeugung der erfindungsgemäßen Einstanzungen offenbart.

Einzelheiten der Erfindung ergeben sich aus der Zeichnung. In ihr ist die Erfindung schematisch und beispielsweise dargestellt. Es zeigen:

Fig. 1 einen Querschnitt durch ein erfindungsgemäßes Verbundprofil,

Fig. 2 eine Seitenansicht des Verbundprofiles gemäß Fig. 1 mit den erfindungsgemäßen Einstanzungen,

Fig. 3 eine Draufsicht auf die Einstanzung in vergrößertem Maßstab,

Fig. 4 einen Querschnitt längs der Linie IV-IV durch die Einstanzung gemäß Fig. 3,

Fig. 5 einen Längsschnitt durch die Einstanzung gemäß Fig. 3,

Fig. 6 und 7 Querschnitt und Längsschnitt durch einen Preßstempel zur Erzeugung von Einstanzungen entsprechend der Fig. 2.

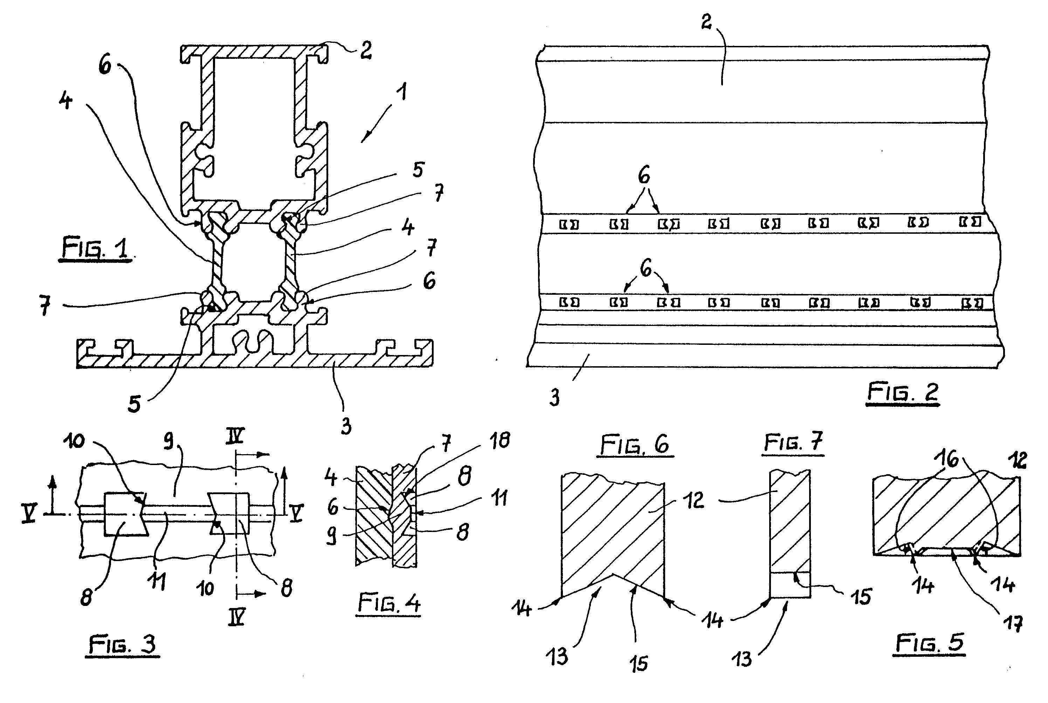

Im Ausführungsbeispiel der Fig. 1 und 2 ist ein Verbundprofil (1) gezeigt, das aus den beiden Metallprofilen (2,3) besteht, die untereinander durch Isolierstäbe (4) verbunden sind. Im Beispiel sind zwei Isolierstäbe (4), distanziert voneinander, dargestellt, wobei davon ausgegangen wird, daß es sich um Isolierstäbe (4) aus festem, leistenförmigem Isolierstoff handelt, die stirnseitig in die Metallprofile (2,3), und zwar in entsprechend gebildete Nuten (5) eingeführt werden.

Die Erfindung ist aber nicht auf die Raumform dieses Ausführungsbeispieles beschränkt. Sie umfaßt auch Ausführungsarten mit nur einem Isolierstab oder mit ausgeschäumten Isolierstoffkörpern oder mit einem Verbund von Isolierstäben und ausgeschäumten Isolierstoffkörpern. Deshalb ist die Erfindung nicht auf das Ausführungsbeispiel beschränkt.

Beim Gegenstand der Fig. 1 und 2 wird der Verbund zwischen den Isolierstäben (4) und den die Nut (5) begrenzenden Schenkeln (7) der Metallprofile (2,3) durch Verzahnungen (6) scher- bzw. verbundfest gemacht. Diese Verzahnungen (6) sind im Prinzip durch Einstanzungen (8) in den außenliegenden Schenkeln (7) der Metallprofile (2,3) gebildet, zwischen denen ein verbleibender Materialbereich (9) gegen den entsprechenden Bereich des Isolierstabes (4) verformt wird. Bevorzugt erfolgt durch diese Verformung eine Verdichtung des verbleibenden Materialbereiches (9), welche zu einer punktförmigen Verzahnung zwischen dem Isolierstab (4) und dem zugeordneten Schenkel (7) der Metallprofile (2,3) führt.

In den Ausführungsbeispielen der Fig. 3 - 7 sind einige Varianten zur Ausbildung der einzelnen Verzahnung bzw. des zugeordneten Stanzwerkzeuges gezeigt.

Im Beispiel der Fig. 3 - 5 ist gezeigt, daß die einzelne Einstanzung (8) an den einander zugekehrten Stanzlinien (10) eine keilförmige oder ausgebauchte Profilierung besitzt, deren mittlerer Bereich in einander abgekehrter Weise zurückversetzt wird. Dies hat die Folge, daß beim Bilden der Einstanzungen (8) eine Verdrängung des zwischen den Einstanzungen (8) befindlichen Materialbereiches (9) im Sinne einer Verdichtung dieses Materialbereiches (9) erfolgt. Außerdem ist die Außenfläche des einzelnen Schenkels (7) linienförmig nach innen eingestaucht, wobei sich aber eine keilförmige Ausbauchung (11) ergibt, die ebenfalls dazu beiträgt, den verbleibenden Materialbereich (9) gezielt nach innen, also in Richtung des Isolierstabes (4) verformen und dabei eine punktförmige Verzahnung (6) herbeizuführen. Wie die Fig. 4 zeigt, ist die keilförmige Ausbauchung (11) erhaben gegenüber der keilförmigen Einbauchung (18) der Einstanzung (8) angeordnet.

Auf diese Weise wird eine gezielte Verdrängung des verbleibenden Materialbereiches (9) erreicht, welche punktförmig in die Außenfläche des Isolierstabes (4) eindrückt und dort eine Verzahnung herbeiführt.

In Fig. 5 ist der Teilquerschnitt durch ein zur Erzeugung dieser Einstanzung (8) geeignetes Werkzeug (12) gezeigt, bei dem die einzelnen Stanzkanten (14) ersichtlich sind, die zurückspringende Flächen (16) aufweisen. Zwischen den innenliegenden Stanzkanten (14) befindet sich ein Stauchwulst (17), der zur Bildung der keilförmigen Ausbauchung (11) gemäß Fig. 3, 4 geeignet ist.

Im Ausführungsbeispiel der Fig. 6 und 7 ist ein anderes Werkzeug dargestellt, dessen Stanzstempel (12) außenliegende Stanzkanten (14) und dazwischen zurückspringende Preßflächen (15) aufweist. Beim Eindringen eines solchen Stanzstempels (12) wird der Schenkel (7) des einzelnen Metallprofiles (2,3) teilweise oder ganz durchtrennt. Der dazwischen befindliche Materialbereich (9) wird aufgrund der zurückspringenden Preßflächen (15) verdichtet und konzentriert gegen die Außenfläche des Isolierstabes (4) verformt, wodurch sich eine punktförmige Verzahnung ergibt.

Der Erfolg dieser Maßnahme besteht darin, daß sich diese Verzahnung nicht im Laufe der Zeit löst, weil sie unabhängig von der Kraft ist, mit der die Schenkel (7) und der Isolierstab (4) miteinander verbunden sind.

## Stückliste

(1) Verbundprofil
(2) Metallprofil
(3) Metallprofil
(4) Isolierstab
(5) Nut
(6) Verzahnung
(7) Schenkel
(8) Einstanzung
(9) verbleibender Materialbereich
(10) Stanzlinie
(11) keilförmige Ausbauchung
(12) Stanzstempel
(13) Stirnfläche
(14) Stanzkante
(15) Preßfläche
(16) zurückspringende Fläche
(17) Stauchwulst

(18) keilförmige Einbauchung

setzte, Stauchwulst (17) vorgesehen ist.

## Ansprüche

1. Wärmegedämmtes Verbundprofil (1), insbesondere für Fenster, Türen und Fassaden, bestehend aus zwei im Abstand voneinander gehaltenen Metallprofilen (2,3), die über mindestens einen in Nuten (5) der Metallprofile (2,3) eingesetzten Isolierstab (4) miteinander verbunden sind, wobei im Bereich der Verbindungsstellen quer zur Profillängsachse sich erstreckende, ineinandergreifende Verzahnungen (6) zwischen dem Isolierstab (4) und den die Nut (5) begrenzenden Schenkeln (7) der Metallprofile (2,3) zur Erhöhung der Scherfestigkeit der Verbindung vorgesehen sind, dadurch **gekennzeichnet,** daß die einzelne Verzahnung (6) aus zwei in geringem Abstand voneinander befindlichen Einstanzungen (8) im Schenkel (7) des Metallprofiles (2,3) mit einem dazwischen verbleibenden Materialbereich (9) besteht, der zahnartig gegen die zugeordnete Außenseite des Isolierstabes (4) gepreßt ist.

2. Verbundprofil nach Anspruch 1, dadurch **gekennzeichnet,** daß der zwischen den Einstanzungen (8) befindliche Materialbereich (9) verdichtet bzw. gestaucht ist.

3. Verbundprofil nach Anspruch 1 oder 2, dadurch **gekennzeichnet,** daß die dem Materialbereich (9) zugekehrte Stanzlinie (10) der Einstanzungen (8) konkav bzw. im mittleren Bereich winkelig zurückspringend ausgebildet ist.

4. Verbundprofil nach Anspruch 1 oder einem der folgenden, dadurch **gekennzeichnet,** daß die Außenseite des Materialbereiches (9) in Richtung zum Isolierstab (4) keilfömig eingebaucht (18) ist.

5. Werkzeug zur Erzeugung einer Einstanzung bei einem Verbundprofil nach Anspruch 1 oder 2, dadurch **gekennzeichnet,** daß die Stirnfläche eines gegen den Schenkel (7) des Metallprofiles (2,3) quer zur Profillängsachse beweglichen Stanzstempels (12) an zwei gegenüberliegenden Seiten vorspringende Stanzkanten (14) und dazwischen eine keilfömig oder konkav zurückspringende Preßfläche (15) aufweist.

6. Werkzeug zur Erzeugung einer Einstanzung bei einem Verbundprofil nach einem der Ansprüche 1 bis 4, dadurch **gekennzeichnet,** daß die Stirnfläche eines gegen den Schenkel (7) des Metallprofiles (2,3) quer zur Profillängsachse beweglichen Stanzstempels (12) zwei in Abstand zueinander befindliche, z.B. rechteckige oder qudratische Stanzkanten (14) aufweist, deren einander zugekehrte Ränder in zueinander entgegengesetzter Richtung zurückspringend angeordnet sind, wobei zwischen den Stanzkanten (14) eine vorspringende, gegebenenfalls zu den Stanzkanten (14) rückver-

FIG. 1

FIG. 3

FIG. 4

FIG. 2

FIG. 6

FIG. 7

FIG. 5

EP 0 350 591 A1

Firma Metallbau Koller AG
Ernicke & Ernicke, Patentanwälte

Europäisches
Patentamt

EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 315 069  (ISKOAI GmbH) <br> * Seite 6, Zeile 17 - Seite 7, Zeile 5; Seite 8, Zeilen 1-5; Figuren 1,3,4,5,8,10 * | 1,3-5 | E 06 B    3/26 |
| Y | | 2 | |
| | --- | | |
| Y | DE-A-2 510 171  (VOLKSWAGENWERK) <br> * Seite 3, Zeilen 1-9; Seite 5, Zeilen 14-31; Figuren 2,3 * | 2 | |
| A | | 3,6 | |
| | --- | | |
| A | EP-A-0 175 094  (VEREINIGTE ALUMINIUM-WERKE) <br> * Seite 3, Zeilen 1-7; Seite 4, Zeile 30 - Seite 5, Zeile 9; Figuren 1,6 * | 1 | |
| | --- | | |
| A | US-A-2 138 404  (W.D. HAAS) <br> * Seite 1, Spalte 2, Zeile 17 - Seite 2, Spalte 1, Zeile 3; Figur 4 * | 2,6 | |
| | --- | | |
| A | US-A-2 944 326  (K.R. STADTHAUS) <br> * Spalte 1, Zeilen 46-61; Spalte 3, Zeilen 16-24; Figuren 5,6 * | 2 | RECHERCHIERTE SACHGEBIETE (Int. Cl.4) |
| | --- | | |
| D,A | DE-A-2 559 599  (SCHÜCO) | | E 06 B <br> B 21 K <br> B 23 P |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 02-10-1989 | VERVEER D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)